# DEMANDE DE BREVET EUROPEEN

(11) **EP 0 968 982 A2**
(43) Date de publication de la demande: **05.01.2000**
(21) Numéro de dépôt: 99401639.2
(22) Date de dépôt: 01.07.1999
(51) Int. Cl.: C05G 3/04, C05G 3/00

(54) **Fertilisant à base d'hydrorétenteur(s)**

(30) Priorité: 01.07.1998 FR 9808384
(71) Demandeur: Bio Stim, 22230 Merdrignac (FR)
(72) Inventeur: Guillermou, Marc, 35190 La Baussaime (FR)
(74) Mandataire: Nevant, Marc

(57) **Abrégé**

La présente invention concerne un fertilisant dans lequel on a incorporé un ou plusieurs hydrorétenteurs, également connus sous le nom de polymères superabsorbants.

Le fertilisant selon l'invention permet notamment de limiter la pollution par lessivage.

## Description

La présente invention concerne le domaine de l'agriculture. Plus précisément, l'invention concerne des fertilisants, notamment des fertilisants comprenant des hydrorétenteurs.

La course effrénée à la rentabilité dans le domaine de l'agriculture, et particulièrement dans le domaine de l'agro-alimentaire, a conduit ces dix dernières années les agriculteurs à utiliser de plus en plus de fertilisants, notamment des fertilisants chimiques.

Toutefois, malgré les améliorations apportées à ces fertilisants, les agriculteurs ont été montrés du doigt par les mouvements écologistes en raison de la pollution occasionnée par leur utilisation.

Il existe donc un réel besoin de mettre à la disposition des agriculteurs des fertilisants "propres", qui respectent l'environnement.

Ainsi, selon un premier aspect, l'invention vise à améliorer l'efficacité des fertilisants classiques.

Selon un autre aspect, l'invention vise à limiter la pollution par lessivage des fertilisants classiques.

Ces aspects, et d'autres qui apparaîtront à la lecture de la demande, sont accomplis, selon la présente invention, au moyen d'un fertilisant comprenant un hydrorétenteur.

Plus précisément, le fertilisant selon l'invention comprend, outre les constituants classiques tels que composés azotés, soufrés et/ou phosphatés, un ou plusieurs hydrorétenteur(s). Avantageusement, le fertilisant selon l'invention comprend également au moins un composé choisi parmi des bactéries, des sucres, des levures ou des algues.

Par hydrorétenteur, on entend dans la présente demande tout polymère superabsorbant.

Ces matériaux d'origine naturelle ou synthétique se sont considérablement développés ces vingt dernières années. Ils sont plus généralement connus sous l'abréviation : S.A.P. ("superabsorbent polymer") et déjà utilisés dans de nombreux domaines. On citera plus particulièrement celui de l'hygiène corporelle : des S.A.P. interviennent dans l'élaboration d'articles absorbants types couches-culottes, serviettes périodiques, papier, compresses, etc.

De tels polymères, mis en contact avec l'eau, forment un gel, physique ou chimique, appelé également hydrogel, capable d'absorber des quantités importantes d'eau dans son réseau macromoléculaire.

Des polymères superabsorbants (S.A.P.) d'origine naturelle, utilisables dans le cadre de la présente invention, sont par exemple ceux décrits dans les brevets US-A-3 589 364, US-A-1 693 890, US-A-3 846 404, US-A-3 935 099 et US-A-3 661 815 (amidon greffé polyacrylonitrile) ainsi que dans le brevet FR-A-2 305 452 (amidon greffé acide acrylique).

Des polymères superabsorbants (S.A.P.), d'origine synthétique, utilisables dans le cadre de la présente invention, sont par exemple, des polymères formés de motifs acryliques ; (méth)acrylate ; méthacrylate d'hydroxyéthyle ; alcool vinylique; acrylamide ; acétate de vinyle ; acrylate d'hydroxyéthyle ; monoacrylate de diéthylèneglycol ; monométhacrylate de diéthylèneglycol; acrylate de 2-hydroxypropyle ; méthacrylate de 2-hydroxypropyle ; acrylate de 3-hydroxypropyle ; méthacrylate de 3-hydroxypropyle ; monométhacrylate de dipropylèneglycol ; vinylpyrrolidone ; méthacrylamide ; N-propylacrylamide ; N-isopropylméthacrylamide ; N-méthylacrylamide ; et/ou N-2-hydroxyéthylméthacrylamide ; ainsi que des hydrogels de polyuréthanne, formés de polymères légèrement réticulés de prépolymères terminés par un isocyanate qui sont les produits de réaction d'un poly(alkylèneoxy)polyol avec un diisocyanate organique légèrement réticulé avec de l'eau ou une polyamine organique, comme décrit dans le brevet US-A-3 939 105 ; des copolymères de monomères à insaturation éthylénique d'acrylates et de méthacrylates hydroxyalkyliques et d'acrylates et méthacrylates d'alcoxyalkylèneglycols, comme décrit dans le brevet US-A-4 038 264 ainsi que d'autres polymères superabsorbants (S.A.P.) connus de l'homme de l'art.

On préférera les polymères superabsorbants (S.A.P.) d'origine synthétique.

Les polymères superabsorbants (S.A.P.), selon l'invention, sont obtenus par réticulation de macromolécules et se présentent sous forme d'écailles, de poudres, de films, de fibres, de sphères ou "perles".

Plus généralement, l'invention sera avantageusement mise en oeuvre avec des particules de polymère superabsorbant de forme sphérique et dont le diamètre est compris en général entre 50 et 500 µm et de préférence entre 100 et 250 µm.

De manière avantageuse, l'hydrorétenteur (ou le mélange d'hydrorétenteurs) représente environ 1 % en poids à environ 50 % en poids, de préférence environ 2 % en poids à environ 25 % en poids, du fertilisant.

Le fertilisant selon l'invention peut également contenir, selon un mode de réalisation préféré, un ou plusieurs composés choisis parmi :
- des sucres comme par exemple les sucres de cannes ;
- des levures, notamment les levures alimentaires naturelles ou chimiques, par exemple les levures boulangères ou les levures issues de traitements naturels de betteraves sucrières ;
- des bactéries, notamment les bactéries telluriques, par exemple des bactéries rizophériques comme celles du genre *Pseudomonas* ; autotrophes comme celles des genres *Nitrosomonas* ou *Nitrobacter* ; ou semi-autotrophes, comme celle du genre *Azobacter*;
- des algues, notamment des algues brunes (de la famille des Phéophycées), vertes (de la famille des Chlorophycées), rouges (de la famille des Floridées ou des Rhodophycées), bleues (de la famille des Cyanophycées), ou bien encore des algues calcaires marines, comme par exemple le lithothamne des glénans.

Généralement, on utilise respectivement environ 0 à 30 %, de préférence 5 à 20 % en poids de sucre, environ 0 à 80 %, de préférence 5 à 40 % en poids d'algues, environ 0 à 15 %, de préférence 1 à 10 % en poids de bactéries et/ou jusqu'à environ 10 % en poids de levures, par rapport au poids du fertilisant.

Le fertilisant selon l'invention peut également comprendre un floculant, de la poudre de lait (notamment de la poudre de lactose), de la poudre de sang séché (notamment de la poudre d'hémoglobine ou de plasma séché), de la poudre d'ortie broyée ou du purin d'ortie, et/ou du compost de déjections animales.

Dans ce cas, on utilise généralement de 0 à 20 % en poids, par rapport au poids du fertilisant, de chacun des constituants ci-dessus.

Le fertilisant selon l'invention peut être préparé en mélangeant les différents constituants dudit fertilisant, selon les techniques bien connues de l'homme du métier, puis en conditionnant le mélange résultant afin d'obtenir un engrais spécifique enrichi en hydrorétenteur(s).

Selon un mode de réalisation avantageux, le mélange peut être granulé, par exemple sous forme compactée, agglomérée, perlée ou bouchonnée. Le mélange peut être également sous forme de semoulette ou de poudre.

Le fertilisant ainsi obtenu est un produit naturel très efficace qui peut être utilisé dans tous les domaines où des fertilisants ou additifs de fertilisation sont employés, notamment :
* les grandes cultures : maïs, blé, pâture (herbe) etc.
* les cultures légumières : carotte, poireau, fraise, haricots, etc.
* les espaces verts : gazon d'agrément et jardins.

Le fertilisant selon l'invention permet donc avantageusement :
* d'améliorer l'efficacité des fertilisations classiques ;
* d'économiser les quantités d'eau d'arrosage ;
* de limiter la pollution par lessivage (nitrates, phosphates, etc.) ;
* de rendre les sols plus fertiles, plus sains ;
* de préserver l'environnement.

Les caractéristiques de l'invention seront mieux comprises à la lecture des exemples ci-après, donnés à titre illustratif. Dans ces exemples, (i) les pourcentages indiqués sont des pourcentages en poids et (ii) on utilise indifféremment un superabsorbant de type polyacrylamide (commercialisé par la Société SNF S.A. sous le nom PR 3005 BIO) ou de type polyacrylate de sodium réticulé (commercialisé par la Société Chemische Fabrik Stockhausen GmbH sous le nom FAVOR SXM 3950).

### Exemple 1

On prépare un fertilisant en mélangeant les ingrédients suivants :

| | |
|---|---|
| Algues brunes | 2 % |
| Vinasse de betterave | 20 % |
| Sucre de canne | 2 % |
| Phosphate naturel | 14 % |
| Soufre, azote | 49 % |
| Lithothamne des glénans | 10 % |
| Hydrorétenteur | 2 % |
| Bactéries | 1 % |

### Exemple 2

On prépare un fertilisant en mélangeant les ingrédients suivants :

| | |
|---|---|
| Algues brunes | 10 % |
| Levures | 2 % |
| Bactéries sur support organique | 10 % |
| Sucres de canne | 8 % |
| Soufre, azote | 25 % |
| Lithothamne des glénans | 20 % |
| Vinasse de betterave | 5 % |
| Hydrorétenteur | 20 % |

## Revendications

1. Fertilisant, qui comprend un ou plusieurs hydrorétenteurs.

2. Fertilisant selon la revendication 1, qui comprend en outre un ou plusieurs composés choisis parmi :
- des bactéries ;
- des levures ;
- des sucres ;
- des algues.

3. Fertilisant selon la revendication 2, qui comprend environ 0 à 30 %, de préférence 5 à 20 % en poids de sucres, par rapport au poids du fertilisant.

4. Fertilisant selon la revendication 2 ou 3, qui comprend environ 0 à 80 %, de préférence 5 à 40 % en poids d'algues, par rapport au poids du fertilisant.

5. Fertilisant selon l'une des revendications 2 à 4, qui comprend environ 0 à 15 %, de préférence 1 à 10 % en poids de bactéries, par rapport au poids du fertilisant.

6. Fertilisant selon l'une des revendications 2 à 5, qui comprend environ 0 à 10 % en poids de levures, par rapport au poids du fertilisant.

7. Fertilisant selon l'une des revendications 1 à 6, dans lequel l'hydrorétenteur (les hydrorétenteurs) est (sont) un (des) polymère(s) superabsorbant(s) d'origine synthétique.

8. Fertilisant selon la revendication 7. dans lequel le(s) polymère(s) superabsorbant(s) a (ont) un diamètre de particule compris entre 50 et 500 µm.

9. Fertilisant selon l'une des revendications 1 à 8, dans lequel l'hydrorétenteur (les hydrorétenteurs) représente(nt) environ 1 % à environ 50 % en poids, du fertilisant.

10. Fertilisant selon l'une des revendications 1 à 9, qui est sous forme granulée, de semoulette ou de poudre.

11. Utilisation d'un hydrorétenteur pour la préparation d'un fertilisant.

12. Utilisation selon la revendication 11, dans laquelle l'hydrorétenteur est tel que défini dans les revendications 7 à 9.
